Europäisches Patentamt

European Patent Office

Office européen des brevets

(11) Publication number: **0 492 015 A1**

# EUROPEAN PATENT APPLICATION

(21) Application number: 90314395.6

(22) Date of filing: 28.12.90

(51) Int. Cl.⁵: **G05D 1/02**, G01S 5/28, G05D 1/03

(43) Date of publication of application:
**01.07.92 Bulletin 92/27**

(84) Designated Contracting States:
**BE CH DE FR GB IT LI NL SE**

(71) Applicant: **URACO IMPEX ASIA PTE LTD.**
**101 Defu Lane 10**
**Singapore 1953(SG)**

(72) Inventor: **Loon, Ng Kok, c/o Nanyang**
**Technological Insitute**
**School of Mechanical & Production**
**Engineering**
**Nanyang Avenue, Singapore 2263(SG)**
Inventor: **San, Au Ann, c/o Nanyang**
**Technological Insitute**

**School of Mechanical & Production**
**Engineering**
**Nanyang Avenue, Singapore 2263(SG)**
Inventor: **Chuan, Lim Ee, c/o Uraco Impex**
**Asia Ptd Ltd.**
**101 Defu Lane 10**
**Singapore 1953(SG)**
Inventor: **Huat, Sim Mong, c/o Uraco Impex**
**Asia Ptd Ltd.**
**101 Defu Lane 10**
**Singapore 1953(SG)**

(74) Representative: **Nicholls, Michael John et al**
**J.A. Kemp & Co., 14, South Square, Gray's**
**Inn**
**London WC1R 5LX(GB)**

(54) Method and apparatus for navigating an automatic guided vehicle.

(57) A method and apparatus for obtaining the position and heading of an automated guided vehicle using the differential times-of-flight of ultrasonic waves received by a receiver from three or more ultrasonic transponders, or one transponder and three or more receivers, to determine the position and heading of the AGV.

Figure 1

The present invention relates to a method and apparatus for navigating an automatic guided vehicle and in particular a system using ultrasonics.

The navigation system of Automated Guided Vehicles (AGVs) can be broadly classified into two groups, viz: those using physical guidepaths and those using virtual guidepaths. Those using physical guidepaths include buried-wire guidance, optical guidance and magnetic guidance. However, AGVs which follow physical guidepaths have the following disadvantages:

(i) the buried wire method is not suitable for use on metallic floors or floors with metallic reinforcements;

(ii) optical and magnetic guidepaths need regular maintenance;

(iii) the systems lack flexibility - once installed, substantial time and cost are required to alter the guidepaths; and

(iv) the systems also offer limited manoeuvrability - AGVs are confined to guidepaths and hence there is the problem of conflicts between AGVs on the same paths. Also, usually, the AGVs can only approach junctions from one fixed direction.

It was because of the above disadvantages of fixed guidepath of AGVs that free ranging AGVs were developed. These are AGVs which do not require physical guidepaths for navigation and guidance. They navigate and follow virtual guidepaths which are stored in their "memory". The various methods of free ranging presently in use or proposed are as follows:

(i) Dead reckoning

By measuring the distance travelled and the steering angle of the AGV, the position and heading of the AGV with respect to the start position can be determined. This method is usually used for short distances only because of cumulative errors due to wheel slippage and wear.

(ii) Inertial guidance

A inertial gyroscope is used to determine the position of the AGV. Since an inertial gyroscope measure the acceleration perpendicular to the direction of travel of the AGV, it cannot detect deviations of the AGV from its path due to constant velocity lateral deviations. Further, reliable inertial gyroscopes are extremely expensive. Some of the more recent systems use laser ring and optical inertial sensors in place of the inertial gyroscope.

(iii) Direct imaging

There are two main types of direct imaging systems, namely, optical and ultrasonic. The sensors generate a current map of the surroundings and compare it to the map stored in memory to establish the vehicle's position by using geometric relations of objects in the map. A simplified version of optical imaging uses a fish-eye lens to map out infrared beacons located in the surroundings. The disadvantage of direct imaging systems is that they require complex and time consuming analysis and computations which restrict the AGV to a crawling speed.

(iv) Triangulation method

Some AGVs use a triangulation method to determine their own position relative to three or more beacons by using cameras or laser transmitters or even bar codes placed at strategic positions. The disadvantage of this method is that it requires an unobstructed line of sight which is not always possible.

Because of the problems mentioned, free-ranging AGVs have generally used the dead reckoning method coupled with periodic calibration using one of the above methods for navigation and guidance. Although this approach offers a reasonable compromise there is still a need for a more reliable and accurate navigation system. Inertia guidance has been adopted from aerospace navigation and it is not a cost effective manufacturing solution. Similarly, direct imaging and triangulation methods require costly instruments and sensors to achieve a reasonable level of accuracy and real time performance. For free ranging AGVs to have practical widespread application, an accurate, reliable and more cost-effective navigation and guidance system is needed.

According to the present invention there is provided apparatus for navigation of an automatic guided vehicle (AGV) comprising at least three transmitter or receiver units including at least one transmitter and at least one receiver, at least one unit for fixing to the vehicle and at least one for maintaining in a fixed known position relative to which the position of the vehicle is to be measured, and calculating means for calculating from the difference in arrival times of signals transmitted from between different receiver/transmitter pairs the relative position of the units.

The apparatus may comprise at least three transmitters and one receiver or at least three receivers and one transmitter, the at least three transmitters or receivers being fixed relative to one another, and wherein the calculating means comprise means for measuring the difference in arrival time of the signals transmitted between three different transmitter/receiver pairs to calculate from the differences the difference in flight time of the signals for at least two different pairs of the at least three transmitters or receivers, to calculate therefrom relative position of the transmitters and receivers.

The three transmitters or receivers can be fixed on the vehicle or, alternatively, three or more transmitters or receivers can be arranged in an array, which may be regular e.g. rectangular or triangular, relative to which the position of the vehicle is to be measured with a single receiver or transmitter on the vehicle itself.

Where the vehicle carries transmitter, the apparatus can further comprise means for transmitting to the vehicle position signals based on its calculated position. These may be either signals giving its position and heading or signals to control its motion, e.g. steering signals.

The apparatus may use ultrasonic receivers and transmitters.

Where the vehicles position is calculated relative to an array of transmitters, the transmitters can be controlled so that only a limited number of them transmit to the vehicle at any time. Such control can be achieved by use of proximity sensors sensing the proximity of the vehicle or by controlling the transmitters in response to the previously calculated position and/or track of the vehicle.

Where the apparatus measures the differential flight times between pairs of signals, the position of the vehicle lies along hyperbolae whose foci lie at the at least three transmitters or receivers forming the basis for the different flight times. The hyperbolae are the locus of points for which the flight time from the two transmitters or receivers of the pair are equal to the measured difference in flight time. By looking at two different pairs of transmitters or receivers two sets of hyperbolas which intercept are obtained. The vehicle lies at one or other of the intersections and the correct one can be determined either by calculating a further pair of hyperbolas from the difference in flight times for another different pair of the three transmitters or receivers, or by reference to the previous position of the vehicle (and choosing, e.g., the position which is closest to the previous position or the likely position determined by dead reckoning from a previous known position).

Where three or more transmitters are used with one receiver the signals from the three can be transmitted simultaneously or at known intervals so that the difference in flight time can be determined.

The ultrasonic system is particularly suited for domestic or industrial use, e.g. inside a room or in a factory i.e. for short ranges e.g. where distances between the receivers and transmitters are of the order of metres, e.g. less than 100 metres and preferably less than 50 metres, rather than for long range land or sea navigation.

The invention also provides a corresponding method of navigating an automatic guided vehicle comprising transmitting a signal between the vehicle and a base-station between at least two different transmitter/receiver pairs and calculating the position of the vehicle from the difference in arrival time of the signal and also an automatic guided vehicle system including one or more vehicles and navigation apparatus as described above.

The invention will be further described by way of non-limitative example with reference to the accompanying drawings in which:-

Figure 1 is a schematic diagram of an embodiment of the invention;

Figure 2 is a diagram indicating the calculation of the position of the vehicle in one embodiment of the invention;

Figure 3 is a diagram illustrating the trajectory of a vehicle;

Figure 4 is a schematic diagram of a second embodiment of the invention;

Figure 5 is a schematic diagram of a third embodiment of the invention;

Figure 6 illustrates possible arrangements of transducers for use with the present invention;

Figure 7 illustrates different pairings of transducers which are used in calculating the position of the vehicle; and

Figure 8 is a diagram indicating a calculation plane for one embodiment of the present invention.

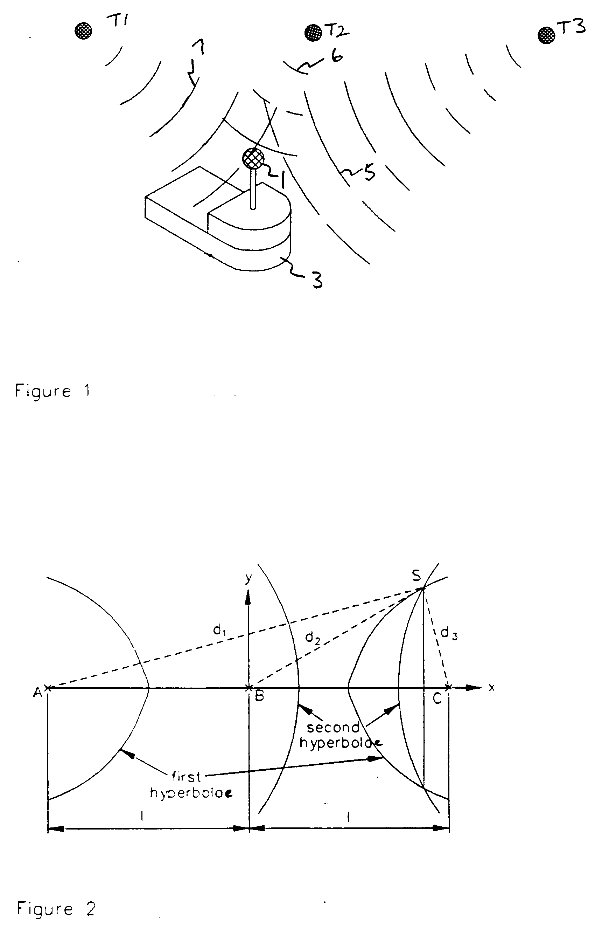

A first embodiment of the present invention has an ultrasonic receiver 1 on-board AGV 3 and an array of off-board ultrasonic transponders (three shown as: T1, T2, T3) on the ceiling above the AGV 3 as illustrated by Figure 1. By measuring the difference in flight times of the ultrasonic pulses 5, 6, 7 received by the receiver 1 from three or more transponders, the position of the AGV 3 can be determined. The signals from the three transmitters can be transmitted simultaneously or at known intervals. If the signals are transmitted simultaneously, the receiver can calculate the sequence of arrival of the signals from the transmitters (i.e. calculate which signal came from which transmitter) by reference to the estimated position (relative to the three transmitters) determined by dead reckoning from a previous known position. If the transmitters transmit at known intervals, the sequence of transmission will be predetermined and the time intervals must be greater a certain interval which is the maximum possible difference in arrival time of the signals at the vehicle related to the system range and transmitter spacing that the pulses cannot interleave. Thus, for example, for an ultrasonic system the interval must be greater than 0.03 second (which is equivalent to 10 meters, the distance travelled by sound in 0.03 second) to ensure that signals will arrive at the receiver in the predetermined sequence.

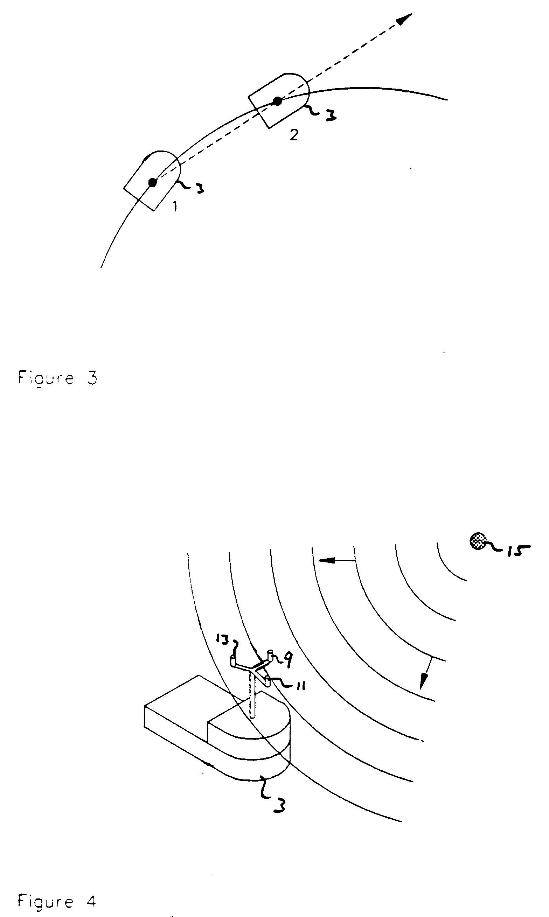

Instead of the triangulation method which is normally employed, the system uses the three transponders as the foci A, B and C of two pairs of hyperbolas (see Figure 2), the equations of which are obtained from the differences in flight time - in Figure 2 from the difference in time between signals from transponders A and C forming a first pair and a second pair B and C. (A similar calculation could be made for A and C to give a third pair of hyperbolas: the various pairing possibilities will be discussed further below). By solving for the intersections of the two hyperbolas and eliminating the redundant solution(s) through correlation to the AGV known trajectory, the location of the AGV is determined. The heading of the AGV can also be estimated by taking two or more quick consecutive measurements of the AGV position as illustrated by Figure 3.

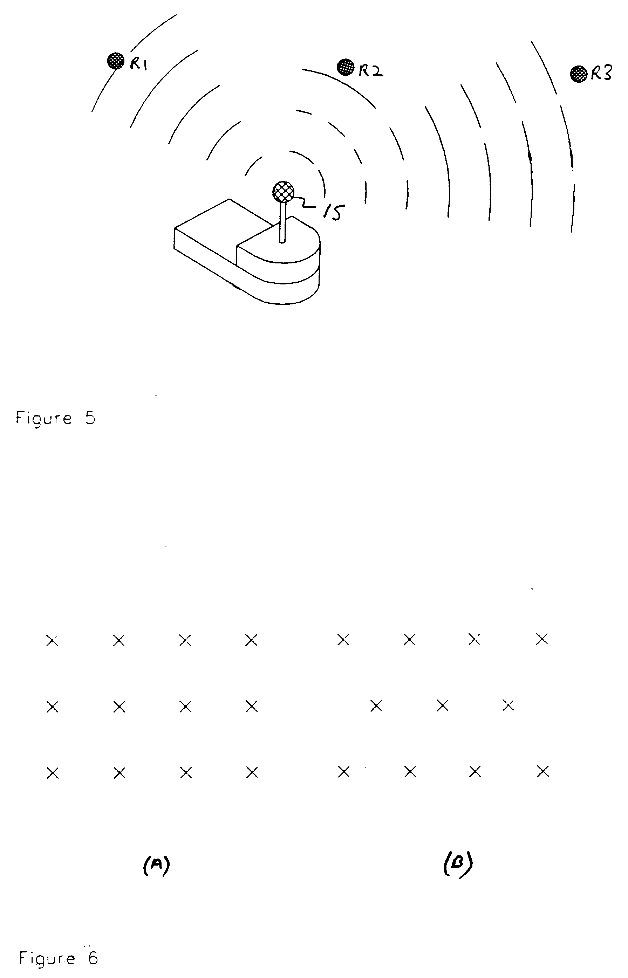

A third embodiment of the invention as shown in Figure 5 has a transmitter 15 on-board the AGV and an array of receivers (of which three R1, R2, R3 are shown) off-board. In this arrangement, the differential times-of-flight are measured off-board and the computations will be carried out by an off-board computer (not shown) which may also act as the host controller for the system. Position signals which can either give the location and heading of the AGV 3 or give steering commands are then transmitted to the AGV from the host computer. This arrangement, however, demands a communication overhead.

The array of ultrasonic transponders or receivers on the ceiling above the AGV 3 can be arranged either in a rectangular or triangular fashion as shown respectively at (A) and (B) in Figure 6. With a transponder array a set of three transponders nearest to the current AGV position are activated to transmit synchronised ultrasonic pulses to the receiver 1 on the AGV 3. The transponders may send the ultrasonic pulses simultaneously or in a staggered manner with known time interval between the moment each transponders transmits the ultrasonic waves. The transponders may be activated by the host controller which constantly monitors the AGV position (the AGV constantly transmits its current position to the host controller) or by proximity sensors which sense the presence of the AGV.

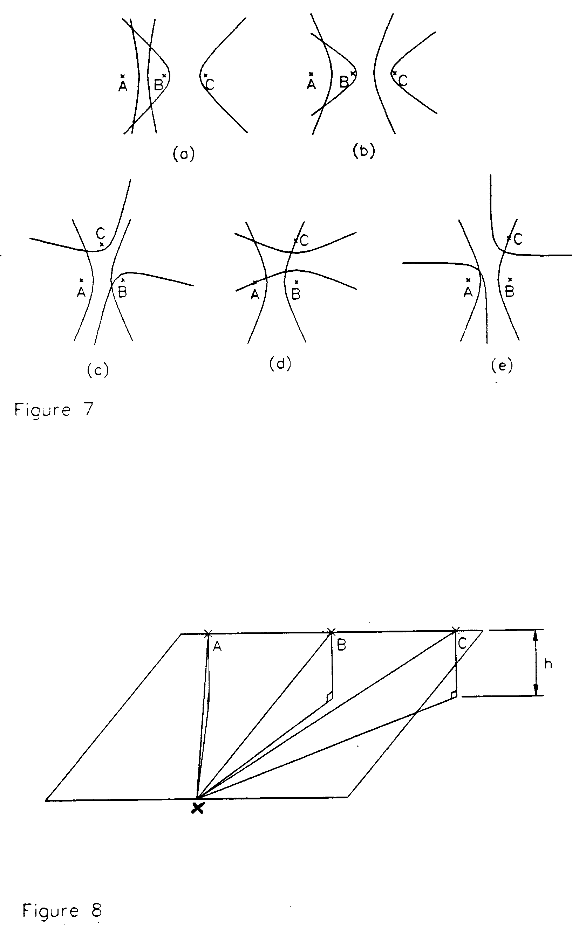

The patterns of transponders or receivers used can be chosen in different ways as shown in Figure 7. In layouts (a) and (b) three in line are used, in (c) three in a triangle and in (d) and (e) three of a rectangular array. For each layout the transponders or receivers for which hyperbolae are calculated can be paired off in different ways, some being shown in (a) and (b) and (c) and (d) and (e) of Figure 7. Some layouts are better than others in terms of ease of calculation of position. The receiver and the transponders are in 3-D space but layouts (a) and (b) can be reduced to a 2-D problem by considering the common slanted plane on which the receiver X and the three transponders A, B and C (or transponder X and three receivers A, B and C) lie as shown in Figure 8. This is not possible for layouts (c), (d) and (e) which have to be solved as a 3-D problem and the equations are of hyperboloids with the transponders as the foci. Thus three sets of hyperboloids are required to determine the location of the AGV for layouts (c), (d) and (e) and the computations are more extensive. For simple systems layouts which reduce the problem to a plane such as (a) and (b) are preferred. It will also be noted that taking only the time differences for two pairs of signal paths can give 2 or 4 possible solutions where the two pairs of hyperbolae intersect. The redundant solution(s) can be eliminated by reference to the previous trajectory of the AGV. However, pairings such as (b) (which looks at pairs A and C and pairs B and C) which produce only two intersections reduce the likelihood of two solutions being close together. The system can be adapted to prefer such solutions where possible. Alternatively, redundant solutions can be avoided by calculating three pairs of hyperbolae, i.e. looking at pairs A and C, A and B, and B and C, from which the vehicle position should be at the intersection of three hyperbolae.

In the embodiments described above the layout of three transmitters or receivers to be used in any one measurement is set when the system is set-up. However, an alternative embodiment is possible where the controller chooses the layout most appropriate at the measurement time.

A second embodiment of the navigation system is shown in Figure 4 and has three receivers 9, 11, 13 on-board the AGV 3 to measure the differential times-of-flight of the ultrasonic pulses from one transponder 15. This arrangement has no problems of transponder synchronization - because there is only one - but suffers from less good accuracy because of the short baseline distances between the receivers 9, 11, 13 which are restricted by the physical size of the AGV. A complementary arrangement with three transponders on the AGV and one receiver remote is also possible. The calculations are carried out in similar fashion to the above by calculating the intersection of two or three sets of hyperbolae.

Because of the lower accuracy of the third embodiment and the need for communication in the second the most preferred arrangement is to have the receiver on-board the AGV and the array of transponders off-board so that all navigation computations can be carried out by the on-board AGV controller using accurately measured differential times-of-flight information.

Thus the invention offers the following possibilities which may be combined:

1. Guidance with a receiver on-board the AGV and an array of off-board ultrasonic transponders (as shown in Figure 1) to determine the location and heading of the AGV,

2. Guidance apparatus with three or more receivers on-board the AGV and an array of off-board ultrasonic transponders (as shown in Figure 4) to determine the location and heading of the AGV; and

3. Guidance apparatus with the transponder on-board the AGV and an array of receivers off-board (as shown in Figure 5) to determine the location and heading of the AGV. Correspondingly, the invention also offers:

4. A method to determine the location of the AGV by measuring the differential times-of-flight of the ultrasonic waves received by the receiver(s) from the transponder(s) as illustrated by Figure 2. Figure 2 illustrates the method 2-dimensionally. In 3-dimensions, three hyperboloids obtained from the differential times-of-flight information will be required to locate the AGV. In each arrangement the three transponders or receivers will be the foci of the hyperbolas or hyperboloids obtained from the differential times-of-flight information;

5. A method which determine the correct AGV position by correlating the multiple computed intersections of the hyperbolas or hyperboloids calculated above to the trajectory of the AGV. The correct AGV position is taken to be the one nearest to the previous AGV position and all other positions are then treated as redundant solutions;

6. A method of estimating the heading of the AGV by taking two or more quick consecutive measurements of the AGV (see Figure 3);

7. A method as above in which the nearest three or more transponders are activated to commence transmitting the ultrasonic waves by either an activation command or signal from the host computer or controller which constantly monitors the AGV position or by proximity sensor which senses the presence of the AGV. In the case of the former, the AGV constantly transmit its current position to the host computer or controller;

8. A method of synchronising the transponders for the purpose of measuring the differential times-of-flight of the ultrasonic waves received by the receiver from the transponders. The transponder may send the ultrasonic waves simultaneously or in a staggered manner at known time interval between the moment each transponders start to transmit the ultrasonic waves;

9. A method of pairing the ultrasonic transponders in different ways as shown in Figure 7 for the purpose of determining the two set of hyperbolas; and

10. A method of arranging the ultrasonic transponders in a rectangular or triangular fashion as shown in Figure 6.

## Claims

1. Apparatus for navigation of an automatic guided vehicle (AGV) comprising at least three transmitter or receiver units including at least one transmitter and at least one receiver, at least one unit for fixing to the vehicle and at least one for maintaining in a fixed known position relative to which the position of the vehicle is to be measured, and calculating means for calculating from the difference in arrival times of signals transmitted from between different receiver/transmitter pairs the relative position of the units.

2. Apparatus according to claim 1 wherein the transmitters and receivers respectively transmit and receive ultrasonic signals.

3. Apparatus according to claim 1 or 2 comprising at least three transmitters and one receiver or at least three receivers and one transmitter, the at least three transmitters or receivers being fixed relative to one another, and wherein the calculating means comprise means for measuring the difference in arrival time of the signals transmitted between three different transmitter/receiver pairs to calculate from the differences the relative position of the transmitters and receivers.

4. Apparatus according to claim 3 wherein the three transmitters or receivers are arranged in a straight line.

5. Apparatus according to claim 1, 2, 3 or 4 comprising at least three transmitters for attachment in fixed relative positions on the vehicle and at least one receiver to have a fixed known position relative to which the position of the vehicle is to be measured, and further comprising means for transmitting to the vehicle signals based on its calculated position.

6. Apparatus according to claim 1, 2, 3 or 4 comprising one transmitter for attachment to the vehicle and at least three receivers to have fixed known positions relative to which the position of the vehicle is to be measured, and further comprising means for transmitting to the vehicle signals based on its calculated position.

7. Apparatus according to claim 1, 2, 3 or 4 comprising one receiver for attachment to the vehicle and at least three transmitters to have a fixed known position relative to which the position of the vehicle is to be measured.

8. Apparatus according to claim 1, 2, 3 or 4 comprising three receivers for attachment in fixed relative positions to the vehicle and at least one transmitter to have a fixed known position relative to which the position of the vehicle is to be measured.

9. Apparatus according to claim 7 or 8 wherein the transmitter(s) are adapted to start transmitting in response to proximity of the vehicle.

10. Apparatus according to claim 7 or 8 wherein the transmitters are controlled to transmit on the basis of the previously calculated position of the vehicle.

11. Apparatus according to any one of the preceding claims wherein a plurality of the transmitters or receivers in fixed known positions are arranged in a regular rectangular or triangular array.

12. An automatic guided vehicle system including one or more automatic guided vehicle and navigation apparatus according to any one of the preceding claims.

13. A method of navigation of an AGV comprising transmitting a signal between the vehicle and a base-station between at least two different transmitter/receiver pairs and calculating the position of the vehicle from the difference in arrival time of the signal and calculating the heading of the AGV by taking two or more rapid consecutive measurements.

Figure 1

Figure 2

Figure 3

Figure 4

Figure 5

(A)                    (B)

Figure 6

Figure 7

Figure 8

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | Mechatronics Systems Engineering vol. 1, no. 2, 13 December 1990, DORDRECHT NL pages 131 - 138; J. Salagnac et al.: "Positioning with Ultra-Sonic Sensors: Review of Techniques and Presentation of a new System" * page 131, paragraph 2 - page 132, line 13; figures 1, 2 * | 1-3, 6, 7, 12 | G05D1/02 G01S5/28 G05D1/03 |
| Y | | 4, 8, 11 | |
| Y | IEEE TRANSACTIONS ON ACOUSTICS,SPEECH AND SIGNAL PROCESSING. vol. 36, no. 1, January 1988, NEW YORK US pages 3 - 9; M. ALLEN ET AL.: "An Adaptative two Stage Kalman Structure for Passive Undersea Tracking" * abstract; figure 1 * | 4 | |
| Y | FR-A-2302533 (COMPAGNIE INDUSTRIELLE DES TELECOMMUNICATIONS CIT-ALCATEL) * page 1, lines 1 - 10; figures 1, 2 * | 8 | |
| Y | US-A-4042904 (A. COBB ) * abstract; figure 1 * | 11 | TECHNICAL FIELDS SEARCHED (Int. Cl.5 ) G05D G01S |

The present search report has been drawn up for all claims

| Place of search | Date of completion of the search | Examiner |
|---|---|---|
| THE HAGUE | 19 AUGUST 1991 | HELOT H.V. |

EPO FORM 1503 03.82 (P0401)